(19) **Europäisches Patentamt**
**European Patent Office**
**Office européen des brevets**

(11) **EP 3 921 165 B1**

(12) **EUROPÄISCHE PATENTSCHRIFT**

(45) Veröffentlichungstag und Bekanntmachung des Hinweises auf die Patenterteilung:
**15.07.2026   Patentblatt 2026/29**

(21) Anmeldenummer: **20703201.2**

(22) Anmeldetag: **31.01.2020**

(51) Internationale Patentklassifikation (IPC):
*B41F 33/00* (2006.01)   *H04N 1/00* (2006.01)
*H04N 1/401* (2006.01)   *B41J 11/00* (2006.01)

(52) Gemeinsame Patentklassifikation (CPC):
**H04N 1/4015; B41F 33/0081; B41J 11/008;**
**H04N 1/00885; H04N 1/00891; H04N 1/00896;**
**H04N 1/00904;** H04N 1/00846

(86) Internationale Anmeldenummer:
**PCT/EP2020/052429**

(87) Internationale Veröffentlichungsnummer:
**WO 2020/161015 (13.08.2020 Gazette 2020/33)**

(54) **VERFAHREN ZUR QUALITÄTSSTEIGERUNG EINES INKJET-DRUCKBILDES**

METHOD FOR INCREASING THE QUALITY OF AN INKJET PRINTED IMAGE

PROCÉDÉ POUR AMÉLIORER LA QUALITÉ D'UNE IMAGE D'IMPRESSION IMPRIMÉE PAR JET D'ENCRE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität:  **04.02.2019   DE 102019102717**

(43) Veröffentlichungstag der Anmeldung:
**15.12.2021   Patentblatt 2021/50**

(73) Patentinhaber: **Windmöller & Hölscher KG**
**49525 Lengerich (DE)**

(72) Erfinder: **MICHAEL, Sven**
**49525 Lengerich (DE)**

(56) Entgegenhaltungen:
**WO-A2-2004/096547     DE-B3- 102011 015 603**
**US-A- 5 819 655**

**Beschreibung**

Die Erfindung betrifft ein Verfahren zur Qualitätssteigerung eines Druckbilds einer Digitaldruckmaschine, das im Inkjet-Druckverfahren auf eine Materialbahn gedruckt wird, wobei die Digitaldruckmaschine einen Druckkopf mit Inkjet-Düsen, eine Bilderfassungseinheit zur Erfassung zumindest eines Teils des Druckbilds und eine Steuereinheit zur Ansteuerung des Druckkopfs umfasst. Außerdem betrifft die Erfindung eine Digitaldruckmaschine zur Durchführung eines derartigen Verfahrens. Beim Inkjet-Druckverfahren auf eine laufende Materialbahn variieren die Drucklängen in der Regel zwischen 10 Metern bis zu einigen 1000 Metern. Insbesondere bei den Drucklängen im oberen Bereich tritt das Problem auf, dass die Qualität des Druckbilds nicht mehr der Qualität zu Beginn des Druckjobs entspricht, da im Laufe des Druckjobs die äußeren Störparameter (wie etwa Temperatur, Viskosität der Druckfarbe, etc.) variieren. Insbesondere wirken sich die folgenden drei Einflüsse negativ auf die Qualität des Druckbilds aus:

- Veränderung der Farborte und Tonwertzunahme (TWZ)
- Verstopfung von einzelnen Inkjet-Düsen
- Dejustierung von Druckköpfen

Die DE 10 2011 015 603 B3 offenbart in diesem Zusammenhang das Drucken eines Testmusters in einem randseitigen Teststreifen des Druckpapiers. Vor diesem Hintergrund ist es die Aufgabe der Erfindung, die Qualität des Druckbilds während des Druckjobs über die gesamte Drucklänge konstant zu halten.

Diese Aufgabe wird durch ein Verfahren gemäß dem Anspruch 1 und eine Digitaldruckmaschine nach dem Anspruch 4 gelöst.

Die Erfindung ermöglicht es, die oben genannten Veränderungen im Druckbild auf einfache Weise zu Erkennen und zu Korrigieren.

Die erfindungsgemäße Lösung basiert auf einem Verfahren, bei dem zumindest bei einem Teil der Druckbilder eine Prüfmarkierung zusammen mit dem Druckbild gedruckt wird, bei dem Soll-Bilddaten der Prüfmarkierung in der Steuereinheit abgespeichert sind, bei dem Ist-Bilddaten der Prüfmarkierung von der Bilderfassungseinheit erfasst und in der Steuereinheit mit den Soll-Bilddaten verglichen und als Soll-Ist-Vergleichsbilddaten abgespeichert werden, wobei in Abhängigkeit der Soll-Ist-Vergleichsbilddaten eine Dejustierung des Druckkopfes detektiert wird.

Der dejustierte Druckkopf wird in einem weiteren Schritt dann wieder neu ausgerichtet.

Bevor die bevorzugten Ausführungsformen aufgeführt werden, werden zunächst noch einige Fachbegriffe erläutert:

Tonwertzunahme

Der Fachbegriff Tonwertzunahme (Abk.: TWZ) bezeichnet den Effekt, dass Rasterpunkte der Druckvorlage (z. B. einer digitalen Bilddatei oder einem Film) auf dem bedruckten Bogen verfahrensbedingt größer erscheinen, das Druckbild also dunkler wird als in der Vorlage vorgesehen. Genauer betrachtet, werden Rasterpunkte bei jeder technischen Übertragung nie ganz gleich übertragen, sondern in irgendeiner verfahrenstypischen Weise deformiert. Dabei treten Verformungen, Vergrößerungen, aber auch Verkleinerungen auf.

Spektralsensor und Spektralwertfunktion

Jeder Mensch verfügt in der Netzhaut über drei Zapfenarten, die sich in ihrer spektralen Empfindlichkeit unterscheiden. Um die individuellen Unterschiede im menschlichen Farbempfinden auszugleichen, wurde ein "Normalbetrachter" in diversen Normen verbindlich festgelegt (insbesondere ISO 12647 und DIN 5033). Die Normalfarbwerte errechnen sich aus dem Spektrum des empfangenen Lichts, dem spektralen Reflexionsgrad der Farbe sowie den genormten Spektralwertfunktionen des Normalbetrachters. Mit den derart berechneten Normalfarbwerten lässt sich dann die mit einem Spektralsensor gemessen Farbe exakt beschreiben.

CIELAB-Farbmodell

Das CIELAB-Farbmodell beschreibt einen dreidimensionalen Farbraum, in dem entsprechende Farbunterschiede, die vom Menschen als gleich groß empfunden werden, auch jeweils messbar annähernd gleich große Abstände haben. Das Bedeutende an diesem Farbraum ist somit die Geräteunabhängigkeit und daraus resultierende Objektivität. Die drei Achsen des CIELAB-Farbraums sind wie folgt definiert:

L = Helligkeitsachse
a = Rot-Grün-Achse

b = Blau-Gelb-Achse

Die Koordinaten des CIELAB Farbraums werden häufig auch mit L*, a* und b* bezeichnet, um sie von den Hunter-Koordinaten Lab (1948 eingeführt von Richard Sewall Hunter) zu unterscheiden. Der Einfachheit halber wird in dieser Beschreibung jedoch auf die Bezeichnung L*, a* und b* verzichtet, d.h. der CIELAB Farbraum wird durchgängig mit Lab bezeichnet.

Der L-Wert bewegt sich immer zwischen 0 und 100. Dabei steht 0 für absolut schwarz und 100 für absolut weiß. Zur Gewährleistung einer eindeutigen Farbempfindung wurden ein Normalbetrachter und die Normallichtart definiert.

Der Unterschied zwischen zwei Farborten wird durch den Farbabstand $\Delta E$ ausgedrückt. Die Berechnung des Farbabstandes erfolgt nach der folgenden Formel:

$$\Delta E = \sqrt{\Delta L^2 + \Delta a^2 + \Delta b^2}$$

Die Werte $\Delta L$, $\Delta a$ und $\Delta b$ sind jeweils die Differenzen zwischen den Komponenten der beiden Farborte. Je nach Anwendungsfall existieren darüber hinaus Weiterentwicklungen zu der obigen Abstandsformel, beispielsweise die aus der Literatur bekannten Farbabstandsformeln mit den Bezeichnungen $\Delta E_{CMC}$, $E_{94}$, $\Delta E_{99}$ oder $\Delta E_{00}$. Im Rahmen dieser Beschreibung wird unter dem Farbabstand $\Delta E$ daher jeder Farbabstand verstanden, der nach einer bestimmten Farbabstandsformel berechnet wurde, wobei der Fachmann in der Lage ist, die jeweils geeignete Farbabstandsformel für den jeweiligen Anwendungsfall auszuwählen.

Testchart

Ein Testchart (äquivalenter Begriff: Testpattern) im Sinne der vorliegenden Beschreibung ist ein getrennt vom Druckbild gedrucktes Muster, dessen Eigenschaften für die Durchführung bestimmter Tests optimiert ist.

Beispielsweise kann ein Testchart für die ICC-Farbkalibrierung eingesetzt werden. In diesem Fall besteht das Testchart aus einer begrenzten Anzahl von Farbfeldern, deren Zusammensetzung aus den Prozessfarben Cyan, Magenta, Gelb und Schwarz bekannt ist. Ein anderes Beispiel für die Verwendung eines Testcharts ist die Fehlerkorrektur von defekten Inkjet-Düsen. In diesem Fall ist das Testchart derart gestaltet, dass defekte Inkjet-Düsen einfach und eindeutig detektiert werden können. Ein weiteres Beispiel für die Verwendung eines Testcharts ist die Erkennung von dejustierten Druckköpfen.

Prüfmarkierung

Eine Prüfmarkierung (äquivalente Begriffe sind "Kalibrierungsfeld" oder "Prüfstreifen", engl. "spit bar") im Sinne der vorliegenden Beschreibung ist im Gegensatz zum Testchart ein Muster, das dem Druckbild überlagert ist. Hierbei sind mehrere Varianten möglich:

Zum einen ist es durch geeignete Rasterverfahren möglich, dass die Prüfmarkierung direkt innerhalb des Druckbilds gedruckt wird. In diesem Fall ist die Prüfmarkierung in der Regel mit dem bloßen Auge nicht erkennbar, während digitale Bilderfassungssysteme eine Erkennung und Weiterverarbeitung ermöglichen. Es ist beispielsweise auch möglich, dass die Prüfmarkierung aus gelben Mikropunkten besteht, die unter UV-Licht durch eine Kamera gut erfassbar sind. Derartige gelbe Mikropunkte werden auch zur Farbdruckermarkierung als sogenannter Machine Identification Code (MIC) eingesetzt.

Zum anderen ist es auch möglich, dass die Prüfmarkierung in Druckrichtung zwischen zwei Druckabschnitten angeordnet ist. Die Druckabschnitte können dabei einen sich wiederholenden Druckinhalt aufweisen oder aber auch in den Druckinhalten variieren.

Erfindungsgemäß ist vorgesehen, dass die Prüfmarkierung dem Druckbild überlagert ist.

Nach einer weiteren bevorzugten Ausführungsform ist vorgesehen, dass die Bilderfassungseinheit eine hochauflösende Kamera ist, mit der auch noch einzelne Mikropunkte erfassbar sind.

Nach einer weiteren bevorzugten Ausführungsform ist vorgesehen, dass die Steuereinheit eine Korrektur der dejustierten Druckköpfe durchführt.

Weitere Einzelheiten und Vorteile der Erfindung werden anhand der beigefügten Zeichnung beschrieben. In dieser zeigt:

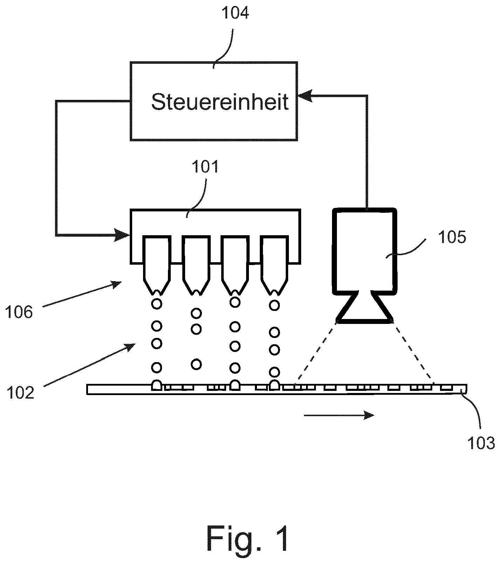

Fig. 1    ein vereinfachtes Blockschaltbild einer Digitaldruckmaschine mit einem Inkjet-Druckkopf zur Durchführung des erfindungsgemäßen Verfahrens.

Fig. 1 zeigt ein vereinfachtes Blockschaltbild einer Digitaldruckmaschine mit einem Inkjet-Druckkopf zur Durchführung des erfindungsgemäßen Verfahrens. Kern der Digitaldruckmaschine ist der Inkjet-Druckkopf 101, der mehrere Inkjet-Düsen 106 umfasst, mit denen aus der Drucktinte einzelne Tintentröpfchen 102 erzeugt und auf die laufende Materialbahn 103 übertragen werden.

Die für das Betreiben des Inkjet-Druckkopfes 101 benötigten Steuerinformationen werden von der Steuereinheit 104 berechnet und an den Inkjet-Druckkopf 101 übertragen. Die Steuereinheit 104 bezieht ihre Informationen über das zu druckende Bild wiederum aus dem digitalen Druckbild, das in Form von digitalen Soll-Rasterpunkten und digitalen Soll-Farbinformationen in der Steuereinheit 104 abgespeichert ist. Das gerasterte Druckbild wurde dabei vor dem Beginn des Druckjobs aus einem üblichen digitalen Bildformat (z. B. RGB 24 bit, TIFF oder PDF) im Rahmen des sogenannten Raster Image Prozesses (Abk.: RIP) erzeugt.

Über dem vollständig gedruckten Druckbild ist eine Bilderfassungseinheit 105 angeordnet, die aus einer Kamera besteht.

Gemäß den einleitend genannten Fehlerquellen können nun die folgenden drei Korrekturmaßnahmen einzeln oder kombiniert durchgeführt werden:

- Farbraum-Korrektur
- Fehlerkorrektur von defekten Inkjet-Düsen
- Ausrichtung von dejustierten Druckköpfen

Die drei Maßnahmen werden im Folgenden näher erläutert:

Farbraum-Korrektur

Zu Beginn und/oder während eines Druckjobs wird ein Testchart gedruckt, dessen erste Bilddaten von der Bilderfassungseinheit 105 erfasst und an die Steuereinheit 104 übertragen werden, wobei in Abhängigkeit von den ersten Bilddaten eine Fehlerkorrektur von defekten Inkjet-Düsen 106 und/oder Ausrichtung des dejustierten Druckkopfes 101 durchgeführt wird.

Nach Abschluss der Fehlerkorrektur und/oder der Ausrichtung wird sodann ein Soll-Druckbild gedruckt, dessen Soll-Bilddaten von der Bilderfassungseinheit 105 erfasst, an die Steuereinheit übertragen und dort abgespeichert werden.

Im Anschluss an den Druck des Soll-Druckbilds werden weitere Ist-Druckbilder gedruckt, deren Ist-Bilddaten von der Bilderfassungseinheit 105 erfasst und in der Steuereinheit 104 mit den Soll-Bilddaten verglichen werden, wobei in Abhängigkeit des Vergleichsergebnisses eine Farbraum-Korrektur durchgeführt wird. Das Vergleichsergebnis entspricht dabei der Delta-Farbinformation ($\Delta E$) im Lab-Farbraum. In Abhängigkeit von $\Delta E$ werden die Steuerinformationen der Steuereinheit 104 derart korrigiert, dass sich das $\Delta E$ verringert. Dies erfolgt in einer Regelschleife mit Korrektur der Steuerinformationen in der Steuereinheit 104, in den Rasterdaten durch Bildmanipulation oder in vorseparierten Contonedaten durch Gradationskurven.

Im Folgenden werden 2 Beispiele mit Zahlenwerten aufgeführt:

Beispiel 1

| Hautton | Cyan | Magenta | Yellow | Black | Orange | Green | Violett |
|---------|------|---------|--------|-------|--------|-------|---------|
| Lab | 84/12/22 | | | | | | |
| 7c | 6,3 | 22,4 | 32,2 | 0 | 9,8 | 0 | 0 |
| | | | | | | | |
| **Messung** | | | | | | | |
| Lab | 80/12/22 | | | | | | |
| 7c | 12,2 | 28,6 | 37,6 | 0 | 9,8 | 0 | 0 |
| | | | | | | | |
| **Delta** | +5,9 | +6,2 | +5,4 | 0 | 0 | 0 | 0 |

Am Beispiel 1 ist zu erkennen, dass eine gemessene Veränderung der Helligkeit L von 84 zu 80 ($\Delta E$ von 4) in diesem Falle nur Auswirkungen auf die chromatischen Farben Cyan, Magenta, und Yellow hat. Durch eine entsprechende Korrektur in den vorseparierten Contonedaten durch Anpassung der Gradationskurven im Cyan-, Magenta- und Yellow-Kanal kann eine Korrektur erreicht werden. Anschließend werden nur die Farbauszüge neu gerastert, die sich auch verändert haben. In diesem Beispiel Cyan, Magenta und Yellow.

Beispiel 2

| Grauton | Cyan | Magenta | Yellow | Black | Orange | Green | Violett |
|---|---|---|---|---|---|---|---|
| Lab | 37/3/3 | | | | | | |
| 7c | 46,3 | 47,5 | 46,3 | 46,3 | 4,3 | 0 | 0 |
| | | | | | | | |
| Messung | | | | | | | |
| Lab | 30/3/3 | | | | | | |
| 7c | 47,8 | 47,8 | 47,8 | 57,6 | 4,7 | 0,8 | 0 |
| | | | | | | | |
| Delta | 1,5 | 0,3 | 1,5 | 11,3 | 0,4 | 0,8 | 0 |

Am Beispiel 2 hat sich die Helligkeit L von 37 auf 30 ($\Delta E$ von 7) verdunkelt, was zur Folge hat, das sich 6 Farben im 7c-Farbraum verändert haben. Bei einer Qualitätsanforderung von z.B. $\Delta E$ kleiner 2,5 ist es ausreichend, eine Anpassung der Gradationskurve für den Farbton Black durchzuführen. Damit keine Änderungen der Gradationskurven zu fehlerhaften Korrekturen anderer Farborte werden, muss eine Mindestanzahl an zu überwachenden Motivfarben gleichzeitig betrachtet und entsprechend auch immer gleichzeitig beurteilt und korrigiert werden.

Fehlerkorrektur von defekten Inkjet-Düsen

Zu Beginn und/oder während eines Druckjobs wird ein Testchart gedruckt, dessen erste Bilddaten von der Bilderfassungseinheit 105 erfasst und an die Steuereinheit 104 übertragen werden, wobei in Abhängigkeit von den ersten Bilddaten eine Fehlerkorrektur von defekten Inkjet-Düsen 106 und/oder Ausrichtung des dejustierten Druckkopfes 101 durchgeführt wird.

Nach Abschluss der Fehlerkorrektur wird sodann ein Soll-Druckbild gedruckt , dessen Soll-Bilddaten von der Bilderfassungseinheit 105 erfasst, an die Steuereinheit 104 übertragen und dort abgespeichert werden,

Im Anschluss an den Druck des Soll-Druckbilds werden weitere Ist-Druckbilder gedruckt, deren Ist-Bilddaten von der Bilderfassungseinheit 105 erfasst und in der Steuereinheit 104 mit den Soll-Bilddaten verglichen werden, wobei in Abhängigkeit des Vergleichsergebnisses eine Fehlerkorrektur von defekten Inkjet-Düsen 106 durchgeführt wird. Hierbei werden die defekten Inkjet-Düsen abgeschaltet und benachbarte Inkjet-Düsen übernehmen und bedrucken den Druckbereich der jeweils abgeschalteten Inkjet-Düse (sogenannte softwarebasierte Inkjet-Düsenüberlappung).

Ausrichtung von dejustierten Druckköpfen

Während des laufenden Druckjobs wird zumindest bei einem Teil der Druckbilder eine Prüfmarkierung zusammen mit dem Druckbild gedruckt. Die Prüfmarkierung liegt in der Steuereinheit 104 in digitaler Form vor und bildet die Soll-Bilddaten. Unmittelbar nach dem Drucken der Prüfmarkierung werden deren Ist-Bilddaten von der Bilderfassungseinheit 105 erfasst und in der Steuereinheit 104 mit den Soll-Bilddaten verglichen und als Soll-Ist-Vergleichsbilddaten abgespeichert, wobei in Abhängigkeit der Soll-Ist-Vergleichsbilddaten dejustierte Druckköpfe detektiert werden. In einem nächsten Schritt führt die Steuereinheit sodann eine Korrektur der der dejustierten Druckköpfe durch.

**Patentansprüche**

1. Verfahren zur Qualitätssteigerung eines Druckbilds einer Digitaldruckmaschine, das im Inkjet-Druckverfahren auf eine Materialbahn gedruckt wird, wobei die Digitaldruckmaschine einen Druckkopf mit Inkjet-Düsen, eine als Kamera ausgebildete Bilderfassungseinheit zur Erfassung zumindest eines Teils des Druckbilds und eine Steuereinheit zur Ansteuerung des Druckkopfs umfasst,

bei dem zumindest bei einem Teil der Druckbilder eine Prüfmarkierung zusammen mit dem Druckbild gedruckt wird, wobei die Prüfmarkierung dem Druckbild überlagert ist,
bei dem die Prüfmarkierung derart in einem Rasterverfahren direkt innerhalb des Druckbilds gedruckt wird, dass die Prüfmarkierung mit dem bloßen Auge nicht erkennbar ist, während digitale Bilderfassungssysteme eine Erkennung und Weiterverarbeitung ermöglichen oder wobei die Prüfmarkierung aus gelben Mikropunkten besteht, die unter UV-Licht durch die Kamera gut erfassbar sind,
bei dem Soll-Bilddaten der Prüfmarkierung in der Steuereinheit abgespeichert sind,
bei dem Ist-Bilddaten der Prüfmarkierung von der als Kamera ausgebildeten Bilderfassungseinheit erfasst und in der Steuereinheit mit den Soll-Bilddaten verglichen und als Soll-Ist-Vergleichsbilddaten abgespeichert werden, wobei in Abhängigkeit der Soll-Ist-Vergleichsbilddaten eine Dejustierung des Druckkopfes detektiert wird.

2. Verfahren nach Anspruch 1, wobei die Bilderfassungseinheit eine hochauflösende Kamera ist.

3. Verfahren nach einem der Ansprüche 1 - 2, wobei die Steuereinheit eine Korrektur des dejustierten Druckkopfes durchführt.

4. Digitaldruckmaschine,

mit einem Druckkopf mit Inkjet-Düsen zum Drucken eines Druckbilds und einer Prüfmarkierung nach Anspruch 1, welche das Druckbild überlagert, im Inkjet-Druckverfahren auf eine Materialbahn,
mit einer als Kamera ausgebildeten Bilderfassungseinheit zur Erfassung zumindest eines Teils des Druckbilds und der Prüfmarkierung, und
mit einer Steuereinheit zur Ansteuerung des Druckkopfs gemäß einem Verfahren der Ansprüche 1 - 3.

## Claims

1. Method for improving the quality of a printed image produced by a digital printer, which is printed onto a material web using an inkjet printing process, wherein the digital printer comprises a print head with inkjet nozzles, an image capture unit designed as a camera for capturing at least a part of the printed image and a controller for controlling the print head,

in which a test mark is printed together with the printed image at least for some of the printed images, wherein the test mark is superimposed on the printed image,
in which the test mark is printed, using a raster scan, directly within the printed image such that the test mark is indistinguishable to the naked eye, whereas digital image acquisition systems facilitate recognition and processing or wherein the test mark consists of yellow microdots, which are easily detectable by the camera under UV light,
in which target image data for the test mark is stored in the controller,
in which actual image data for the test mark is captured by the image capture unit designed as a camera and compared with the target image data in the controller and stored as target-actual comparison image data, wherein a maladjustment of the print head is detected as a function of the target-actual comparison image data.

2. Method according to claim 1, wherein the image capture unit is a high-resolution camera.

3. Method according to any one of claims 1-2, wherein the controller performs a correction of the maladjusted print head.

4. Digital printer,

with a print head with inkjet nozzles for printing a printed image and a test mark according to claim 1, which is superimposed on the printed image, on a material web using an inkjet printing process,
with an image capture unit designed as a camera for capturing at least a part of the printed image and the test mark, and
with a controller for controlling the print head according to a method of claims 1-3.

**EP 3 921 165 B1**

**Revendications**

1. Procédé d'augmentation de la qualité d'une image d'impression d'une machine d'impression numérique qui est imprimée dans le procédé d'impression par jet d'encre sur une bande de matériau, dans lequel la machine d'impression numérique comprend une tête d'impression avec des buses de jet d'encre, une unité de capture d'image formée comme caméra pour la capture d'au moins une partie de l'image d'impression et un dispositif de commande pour la commande de la tête d'impression,

   pour lequel au moins pour une partie des images d'impression, un marquage de contrôle est imprimé conjointement avec l'image d'impression, dans lequel le marquage de contrôle est superposé sur l'image d'impression, pour lequel le marquage de contrôle est imprimé dans un procédé de tramage directement dans l'image d'impression de telle manière que le marquage de contrôle ne puisse être détecté à l'œil nu alors que des systèmes de détection d'image numériques permettent une détection et un traitement ultérieur ou dans lequel le marquage de contrôle se compose de micropoints jaunes qui peuvent être bien capturés sous lumière UV par la caméra,
   pour lequel des données d'image de consigne du marquage de contrôle sont enregistrées dans le dispositif de commande,
   pour lequel des données d'image réelles du marquage de contrôle sont capturées par l'unité de capture d'image formée comme caméra et sont comparées dans le dispositif de commande avec les données d'image de consigne et enregistrées comme données d'image de comparaison de consigne-réelles,
   dans lequel un désajustement de la tête d'impression est détecté en fonction des données d'image de comparaison de consigne-réelles.

2. Procédé selon de revendication 1, dans lequel l'unité de capture d'image est une caméra à haute résolution.

3. Procédé selon l'une quelconque des revendications 1 - 2, dans lequel le dispositif de commande effectue une correction de la tête d'impression désajustée.

4. Machine d'impression numérique,

   avec une tête d'impression avec des buses de jet d'encre pour l'impression d'une image d'impression et un marquage de contrôle selon la revendication 1 qui est superposé sur l'image d'impression, dans le procédé d'impression par jet d'encre sur une bande de matériau,
   avec une unité de capture d'image formée comme caméra pour la capture d'au moins une partie de l'image d'impression et du marquage de contrôle et
   avec un dispositif de commande pour la commande de la tête d'impression selon un procédé selon les revendications 1 - 3.

Fig. 1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102011015603 B3